(19) Europäisches Patentamt
European Patent Office
Office européen des brevets

(11) Veröffentlichungsnummer: **0 234 226 B1**

(12) # EUROPÄISCHE PATENTSCHRIFT

(45) Veröffentlichungstag der Patentschrift: **15.04.92**

(51) Int. Cl.$^5$: **C08J 3/20**

(21) Anmeldenummer: **87100479.2**

(22) Anmeldetag: **16.01.87**

(54) **Verfahren zur kontinuierlichen Herstellung von bei Raumtemperatur vulkanisierbaren Silikonmassen.**

(30) Priorität: **17.01.86 DE 3601324**

(43) Veröffentlichungstag der Anmeldung:
**02.09.87 Patentblatt 87/36**

(45) Bekanntmachung des Hinweises auf die Patenterteilung:
**15.04.92 Patentblatt 92/16**

(84) Benannte Vertragsstaaten:
**AT BE CH DE FR GB IT LI NL**

(56) Entgegenhaltungen:
**FR-A- 1 506 697**
**FR-A- 2 289 572**
**FR-A- 2 292 744**
**GB-A- 1 174 219**
**US-A- 4 515 932**

(73) Patentinhaber: **WACKER-CHEMIE GMBH**
**Hanns-Seidel-Platz 4**
**W-8000 München 83(DE)**

(72) Erfinder: **Stary, Fridolin, Dr. Dipl.-Ing., Chem.**
**Gluckstrasse 9**
**W-8263 Burghausen(DE)**
Erfinder: **Kremer, Peter, Dipl.-Ing.**
**Gluckstrasse 45**
**W-8263 Burghausen(DE)**

**EP 0 234 226 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur kontinuierlichen Herstellung von bei Raumtemperatur zu Elastomeren vernetzbaren (RTV) Silikonmassen, insbesondere Einkomponentensilikonmassen. Solche Massen enthalten zumeist neben Organosiliciumverbindungen Weichmacher, Vernetzer, Füllstoffe and gegebenenfalls Katalysatoren und weitere Stoffe.

Aus GB 1 174 219 (Werner & Pfleiderer KG, ausgegeben am 17. Dezember 1969) ist es bekannt, solche Massen kontinuierlich aus ihren Ausgangsstoffen herzustellen, indem man letztere in einem Doppelschneckenkneter vermischt und entgast.

Aufgabe der Erfindung war es, ein Verfahren zur kontinuierlichen Herstellung von bei Raumtemperatur zu Elastomeren vernetzbaren (TRV), insbesondere einkomponentigen Silikonmassen bereitzustellen, das es erlaubt, auch schwer einzuarbeitende und/oder schwer zu dispergierende Füllstoffe homogen im Polymer zu verteilen.Des weiteren war es die Aufgabe der vorliegenden Erfindung, Silikonmassen der oben genannten Art herzustellen, wobei eine Zwischenlagerung der Produkte zum Zwecke der Abkühlung nicht mehr erfolgen muß. Diese Aufgaben werden durch die vorliegende Erfindung dadurch gelöst, daß in einem ersten Schritt zu vernetzendes Diorgano(poly)siloxan, Füllstoff(e) und gegebenenfalls entweder Katalysator(en) oder Vernetzer und eventuell ein Teil oder alle gegebenenfalls zu verwendenden Hilfsstoffe in einem kontinuierlich arbeitenden geschlossenen Mischer vereinigt werden und in einem zweiten Schritt in einem oszillierendem Pilgerschrittkneter der so erhaltenen Masse die nicht im ersten Schritt zugegebenen Vernetzer und/oder gegebenenfalls Katalysator(en) sowie der Rest der gegebenenfalls zu verwendenden Hilfsstoffe zudosiert werden und die Masse in diesem Kneter homogenisiert und entgast wird.

Im erfindungsgemäßen Verfahren können alle diejenigen Rezepturen für einkomponentige RTV-Silikonmassen verarbeitet werden, die auch bisher kontinuierlich verarbeitet werden konnten. Zusätzlich ist es im erfindungsgemäßen Verfahren möglich, nach Rezepturen zu arbeiten, die bisher nur im Satzbetrieb Produkte mit zufriedenstellender Qualität ergaben. Üblicherweise enthalten solche Einkomponenten-RTV-Silikonmassen ein oder mehrere $\alpha,\omega$ -Dihydroxy(poly)diorganosiloxane als Basispolymere, ein oder mehrere Silane mit zwei, drei oder vier Gruppen, die mit den Hydroxygruppen des Basispolymers kondensieren können, als Vernetzer und einen oder mehrere Katalysatoren, die die Kondensation des Vernetzers mit dem Basispolymer beschleunigen, Füllstoffe und gegebenenfalls weitere Stoffe, wie Weichmacher etc.

Die genannten $\alpha,\omega$ -Dihydroxy(poly)-diorganosiloxane können solche der Formel

$$HO\left[-\underset{R}{\overset{R}{Si}}-O-\right]_n H$$

sein, wobei n einen Wert von 2 bis 1500 besitzt und die Reste

R gleiche oder verschiedene, gegebenenfalls substituierte Kohlenwasserstoffreste mit 1 bis 18 Kohlenstoffatomen sind.

Es können anstatt der $\alpha$ , $\omega$ -Dihydroxy(poly)-diorganosiloxane auch Copolymere eingesetzt werden, die neben Einheiten der Formel $R_2SiO$ auch andere, nicht siliciumhaltige Einheiten besitzen.

Obwohl in der obigen Formel nicht angegeben, können die $\alpha$, $\omega$ -Dihydroxy(poly)diorganosiloxane neben Einheiten der Formel $R_2SiO$ bis zu 5 Mol% auch andere, zumeist als mehr oder weniger schwer vermeidbare Verunreinigungen gegenwärtige Einheiten, nämlich solche der Formel

$$SiO_{4/2}\ ,\ RSiO_{3/2}$$

und

$$R_3SiO_{1/2}$$

enthalten, wobei R die oben angegebene Bedeutung hat.

Als Silane mit 2, 3 oder 4 mit der Hydroxygruppe kondensierbaren Gruppen werden solche der Formel

$R_ySiX_{4-y}$

eingesetzt, wobei R die oben angegebene Bedeutung hat, y den Wert 0, 1 oder 2 besitzt und X die mit Hydroxylgruppen kondensierbare Gruppe ist.

Solche kondensierbare Gruppen sind dem Fachmann auf dem Gebiet der Silikone bestens bekannt (W, Noll, Chemistry and Technology of Silicones, Academic Press 1968, Seite 399). Beispiele für solche Gruppen sind die Acyloxy-, die Alkoxy-, die Aminogruppe, Halogenatome, insbesondere Chlor und Brom, Si-O-N gebundene Ketoximgruppen, sowie das Wasserstoffatom.

Beispiele für Reste R sind Alkylreste, wie der Methyl-, Athyl-, n-Propyl-, iso-Propyl-, n-Butyl-, t-Butyl-, n-Pentyl-, neo-Pentyl-, n-Hexylrest, Heptyl-, Octyl-, Nonyl-, Decyl-und Octadecylreste; Alkenylreste, wie der Vinyl- und der Allylrest; Alkarylreste, wie o-, m-, p-Tolylreste, Xylylreste, Ethylphenylreste; Aralkylreste, wie der Benzylrest and Phenylethylreste; Arylreste wie der Phenyl-, Naphtyl- und Anthrylrest; halogenierte Kohlenwasserstoffreste, wie der Chlormethyl-, Chlorethyl-, 3,3,3-Trifluorpropyl-, o-, m-, p-Chlorphenylreste und Brom- sowie Fluorphenylreste.

Bevorzugt als Reste R sind $C_1$ - $C_4$-Alkyl-, insbesondere Methylreste.

Beispiele für im Vernetzer vorhandene kondensierbare Gruppen sind Wasserstoff, Chlor, Brom, Acyloxygruppen, wie die Acetoxygruppe und die Propionyloxygruppe, Alkoxygruppen mit 1 bis 8 Kohlenstoffatomen,wie Methoxy-, Ethoxy-, n-Propoxy-, Isopropoxy-, n-Pentoxy, neo-Pentoxy-, n-Heptoxy-, n-Octoxy- und iso-Octoxygruppen; Aminogruppen, wie die $NH_2$-Gruppe und die $(CH_3)_2N$-Gruppe und Ketoximgruppen, wie die Si-O-N-gebundene Acetonoximgruppe, eine Amidgruppe, wie die N-Methylacetamidogruppe oder Benzamidogruppe.

Beispiele für Katalysatoren, die die Kondensation des Vernetzers mit dem $\alpha,\omega$-Dihydroxy(poly)-diorganosiloxan beschleunigen, sind Amine,wie 3-Ethoxypropylamin, Organotitanate, wie Tetrabutyltitanat, Organozinnverbindungen, wie Zinnoctoat oder Dibutylzinndilaurat, Dibutylzinndiacetat, Metallsalze von Carbonsäuren, insbesondere Naphtenate, Oktoate, Hexoate, Laurate und Acetate vieler Metalle, beispielsweise Pb,Zn,Zr,Sb,Fe,Cd,Sn und Ba.

Als Füllstoffe in den erfindungsgemäß herzustellenden Polyorganosiloxanmassen sind verstärkende, faserförmige und nicht verstärkende Füllstoffe zu nennen. Beispiele für verstärkende Füllstoffe, also Füllstoffe mit einer BET-Oberfläche von mehr als 50 $m^2/g$ sind pyrogene Kieselsäure, gefällte Kieselsäure großer spezifischer Oberfläche, Furnace-Ruß und Acetylen-Ruß. Beispiele für nicht verstärkende Füllstoffe, also für Füllstoffe mit einer BET-Oberfläche von nicht mehr als 50 $m^2/g$ sind Quarz, Diatomeenerde, Calciumsilikat, Zirkoniumsilikat, Zeolithe, Metalloxidpulver, wie Aluminium-, Titan-, Eisen-oder Zinkoxide, Calciumsilikat, Bariumsulfat, Calciumcarbonat, Gips, Kunststoffpulver, wie Polyacrylnitrilpulver.

Faserförmige Füllstoffe sind Asbest, Glasfasern sowie Kunststoffasern.

Die genannten Füllstoffe können hydrophobiert sein, beispielsweise durch die Behandlung mit Organosilanen bzw. -siloxanen oder durch Veräthérung von Hydroxylgruppen zu Alkoxygruppen. Es können Gemische von mehreren Füllstoffen verwendet werden.

Als zusätzliche Stoffe können in den nach dem erfindungsgemäßen Verfahren hergestellten Silikonmassen alle weiteren Stoffe verwendet werden, die auch bisher in bei Raumtemperatur vulkanisierbaren Silikonmassen anstatt oder zusätzlich zu den oben angeführten Komponenten verwendet wurden, wie beispielsweise Pigmente, Weichmacher, Haftvermittler, Kettenverlängerer, Geruchsstoffe und Lösungsmittel.

Vorzugsweise werden bei der erfindungsgemäßen Herstellung von Silikonmassen $\alpha,\omega$-Dihydroxy-(poly)diorganosiloxane in Mengen von 5 bis 90 Gewichtsprozent, insbesondere von 40 bis 70 Gewichtsprozent, Vernetzer in Mengen von 0,5 bis 20 Gewichtsprozent, insbesondere von 3 bis 10 Gewichtsprozent, Katalysator(en) in Mengen von 0 bis 5 Gewichtsprozent, insbesondere von 0,01 bis 1 Gewichtsprozent, Füllstoff(e) in Mengen von 0 bis 60 Gewichtsprozent, insbesondere von 5 bis 30 Gewichtsprozent eingesetzt, wobei sich die Prozentsätze auf die Summe der Gewichte von $\alpha,\omega$-dihydroxy(poly)diorganosiloxan(en), Vernetzer, Katalysator(en) und Füllstoff(en) und Hilfsstoff(en) beziehen.

In einem ersten Schritt des erfindungsgemäßen Verfahrens werden $\alpha,\omega$ -Dihydroxy(poly)-diorganosiloxan(e), Füllstoff(e), gegebenenfalls entweder Vernetzer oder Katalysator und gegebenenfalls zusätzliche Stoffe in einem kontinuierlich arbeitenden geschlossenen Mischer vereinigt.

In einem zweiten Schritt des erfindungsgemäßen Verfahrens wird das im ersten Schritt erhaltene Gemisch in einem oszillierenden Pilgerzahnkneter homogenisiert und entgast, vorzugsweise bei einem Druck unter 10kPa(abs), in dem auch dem Gemisch entweder der Katalysator oder der Vernetzer und gegebenenfalls zusätzliche Stoffe zugegeben werden.

Die Förderung des im ersten Schritt erhaltenen Gemisches in den oszillierenden Pilgerzahnkneter erfolgt vorzugsweise mittels einer Pumpe. Die Förderung der im zweiten Schritt erhaltenen, an sich gebrauchsfertigen Silikonmasse in das Behältnis, in dem die Silikonmasse verkauft werden kann, erfolgt vorzugsweise mittels einer entgasbaren Pumpe, die vorzugsweise friktionsarm arbeiten sollte. Besonders bevorzugt ist eine Schraubenspindelpumpe mit selbstreinigender Entlüftung.

Als im ersten Schritt des erfindungsgemäßen Verfahrens einsetzbare kontinuierliche geschlossene Mischer sind kontinuierliche Zwangsinnenmischer, insbesondere eine axial durchströmte Mischturbine (axial flow mixing turbine) einerseits und ein oszillierender Pilgerzahn- bzw. Pilgerschrittkneter andererseits bevorzugt. Wird ein oszillierender Pilgerzahnkneter verwendet, so braucht dieser, im Gegensatz zu dem im zweiten Schritt zu verwendenden Kneter, keine Entgasungsvorrichtung, wie Vakuumstutzen und dergleichen, zu besitzen. Es können in diesem Falle für beide Stufen

entweder zwei oszillierende Pilgerzahnkneter eingesetzt werden, oder aber ein einziger solcher Kneter von entsprechend größerer Baulänge. Wird ein einziger oszillierender Pilgerzahnkneter für beide Schritte eingesetzt, so sind 2 Anlagenvarianten möglich.

Variante a:

Der Pilgerzahnkneter besteht aus 2 Zonen, wobei die in Förderrichtung erste bei einem Arbeitsdruck gefahren wird, welcher um den Druck der umgebenden Atmosphäre erhöht ist (Normaldruckteil), während der zweite, beispielsweise durch eine Stauscheibe vom ersten getrennte Teil, bei einem niederen Druck, vorzugsweise unter 10kPa (abs.), betrieben wird (Vakuumteil).

Variante b:

Der Pilgerzahnkneter besteht aus einer einheitlichen Zone unter niederem Druck, vorzugsweise unter 10kPa (abs.). Dies beinhaltet die vakuumgerechte technische Einschleusungsausführung für den Füllstoff. Zur Füllstoffeinbringung und -entlüftung unter Vakuum ist vorzugsweise ein mit ca. 50 Grad C beheizter Schüttgut-Totalabscheider einzusetzen. Dessen Filterelemente werden kontinuierlich mittels Druckstoß abgereinigt. Als Abreinigungsgas dient Stickstoff oder Preßluft, jeweils getrocknet entsprechend Taupunkt unter - 10 Grad C, vorzugsweise unter - 40 Grad C.

Während in diesen Anordnungen a und b für einige Rezepturen und bei weniger schwer zu dispergierenden Füllstoffen durchaus gute Glätte des Produktes erreicht wird, werden für schwer zu dispergierende Füllstoffe bessere Produktqualitäten erzielt, wenn man für die Einmischfunktion statt des oszillierenden Pilgerzahnkneters eine axial durchströmte Mischturbine einsetzt.

Das Prinzip der Mischturbine ist z. B. von K. Stade in SWISS CHEM 1 (1979),Heft 6 beschrieben. Es kann eine einstufige oder eine mehrstufige Mischturbine verwendet werden. Besonders bevorzugt ist eine einstufige Mischturbine. Insgesamt gesehen ist im ersten Schritt des erfindungsgemäßen Verfahrens der Mischturbine der Vorzug zu geben, da sie,wie oben bereits erwähnt, vielseitiger einsetzbar ist.

Der im zweiten Schritt verwendete oszillierende Pilgerzahnbzw. Pilgerschrittkneter ist in der Fachwelt auch als KO-Kneter (Ullmans Encyklopädie der technischen Chemie, 4. Auflage, Band 2, Seite 296, Verlag Chemie, Weinheim/Bergstraße B.R.Deutschland) oder als Buss-Kneter (Buss-Kneader) bekannt.

Mit Ausnahme des Katalysators und/oder des Vernetzers können sämtliche Komponenten schon im ersten Schritt, nämlich in den kontinuierlich arbeitenden geschlossenen Mischer zugegeben werden. Um unerwünschte vorzeitige Vernetzung der nach dem erfindungsgemäßen Verfahren hergestellten Silikonmassen zu vermeiden, wird entweder der Vernetzer oder/und der Katalysator oder zumindest der Hauptanteil entweder des Vernetzers oder/und des Katalysators nicht im ersten, sondern erst im zweiten Schritt des erfindungsgemäßen Verfahrens zugegeben.

Ob es vorteilhafter ist, den Vernetzer erst im zweiten Schritt zuzugeben oder ob beispielsweise bei Zugabe des Katalysators und des Vernetzers im zweiten Schritt bessere Produkte erzielt werden, hängt von der jeweiligen Rezeptur und insbesondere vom Typ des bzw. der jeweils einzumischenden Vernetzer(s) ab.

Grundsätzlich können ein Teil oder alle Bestandteile der erfindungsgemäß herzustellenden Silikonmassen, $\alpha,\omega$ -Dihydroxy(poly)diorganosiloxan und Füllstoff(e) ausgenommen, auch unmittelbar vor oder während des zweiten Schrittes zugegeben werden.

Der im zweiten Schritt des erfindungsgemäßen Verfahrens eingesetzte oszillierende Pilgerschrittkneter wird vorzugsweise gekühlt. Es sind Kneter solcher Bauart im Handel erhältlich, bei denen ohne Umbauten die Kühlung der Schnecke und des Außenmantels möglich ist.

Während im ersten Schritt des erfindungsgemäßen Verfahrens zumindest $\alpha$ ,$\omega$ -Dihydroxy-(poly)diorganosiloxan(e) und Füllstoff(e) und eventuell weitere Stoffe weitgehend vorvermischt werden, werden im zweiten Schritt die übrige(n) Komponente(n) zugegeben und die so entstandene pastöse Masse entgast und homogenisiert, wobei die Masse vorzugsweise gekühlt wird. Zum Austrag der so hergestellten Silikonmassen kann an sich jede zum Fördern pastöser Massen geeignete Pumpe, insbesondere friktionsarme Pumpen, eingesetzt werden. Wird auf ein blasenfreies Produkt Wert gelegt, so sollte die Pumpe entgast werden. Besonders bewährt im erfindungsgemäßen Verfahren hat sich eine Schraubenspindelpumpe mit selbstreinigender Entlüftung, da sie das Produkt ohne wesentliche Temperaturerhöhung blasenfrei austrägt. Die derart ausgetragenen, nach dem erfindungsgemäßen Verfahren hergestellten Silikonmassen besitzen beim Zeitpunkt des Austrags im allgemeinen eine Temperatur von unter 50° C, so daß diese Massen ohne Zwischenlagerung abgefüllt werden können, beispielsweise in Fässer, Tuben, Kartuschen etc.

Da die erfindungsgemäß herzustellenden Silikonmassen zumeist bei Zutritt von Luftfeuchtigkeit vernetzen, beinhaltet das erfindungsgemäße Verfahren auch implizit Einrichtungen, die den Zutritt von Feuchtigkeit vermindern. Ist einer der verwendeten Füllstoffe brennbar, wie z. B. Polyacrylnitrilpulver, so kann es ratsam sein, die Anlage ganz oder teilweise mit Schutzgas zu beaufschlagen, z. B. mit Stickstoff, Argon oder einem Gemisch dieser Gase.

Selbstverständlich ist das vorstehend beschriebene Verfahren auch zur Herstellung von zwei komponentigen RTV-Silikon-Massen von großem Vorteil, insbesondere wenn auf der vorstehend beschriebenen Anlage die Komponente gemischt und homogenisiert wird, die das Diorganopolysiloxan und zumindest die Hauptmenge des Füllstoffs enthält.

Weiterhin wäre es denkbar, das Verfahren gemäß GB 1 174 219 mit einer Schraubenspindelpumpe mit selbstreinigender Entlüftung als Austragspumpe zu kombinieren, wobei jedoch ein Vorteil des erfindungsgemäßen Verfahrens, nämlich die niedrige Produktaustragstemperatur, zumindest zum Teil verlorenginge.

Obwohl nicht oben explizit angegeben, kann die im erfindungsgemäßen Verfahren verwendete Anlage weitere, an sich bekannte Bestandteile enthalten, wie Dosier- und andere Fördereinrichtungen, Meß- und Regeleinrichtungen, beispielsweise für Druck, Temperatur, Volumenströme; Ventile, übliche,zur Entgasung und zur Kühlung benötigte Teile, Förder- und Verpackungseinrichtungen, Vorrichtungen zum Beaufschlagen des Guts mit Schutzgas (wie Stickstoff oder Argon) sowie Vorrichtungen zum Trocknen solcher Gase.

Apparatur:

Die Anlage ist in der Figur skizziert. In die einstufige Mischturbine 1 (Type MT 170 PF 2, Hersteller: Buss AG, CH-4133 Pratteln) führen die Dosierungsvorrichtungen für das $\alpha$, $\omega$-Dihydroxy-(poly)diorganosiloxan (2), Füllstoff (3), Weichmacher (4) und Vernetzer (5). Der Außenmantel der Mischturbine ist wassergekühlt. Zwischen dem Scherspalt der Mischturbine (6) und der Mohno-Pumpe (7) (Type NP Hersteller: Netzsche, D-8264 Waldkraiburg) wird Stickstoff aufgeblasen. Die Mohno-Pumpe (7) besitzt eine Austragsöffnung in den KO-Kneter (8) (Oszillierender Pilgerschrittkneter, Type: KO-Kneter KR 200; Hersteller: Buss AG, CH-4133 Pratteln), dessen Schnecke und Außenmantel eine Wasserkühlung (9) besitzt. Der Staurring (10) im Kneter trennt die Normaldruck- von der Vakuumzone. Der Katalysator (oder der Vernetzer) wird durch die Pumpe (11) zudosiert. Gegen Ende der Kneterstrecke und am Anfang der Schraubenspindelpumpe (13) befinden sich Entgasungsvorrichtungen (12). Die Pumpe (13) (Type L2N-S, Reg.Nr. L2.02.15; Hersteller: Leistritz GmbH, D-8500 Nürnberg) ist eine selbstreinigende Doppelspindelpumpe. Der Produkteintrag ist etwa auf halber Länge des Doppelspindelpakets.

Beispiel 1:

Apparatur: Wie oben beschrieben und in der Figur skizziert. Es wurde eine Kneterlänge von 14 D (1 D = 1 Durchmesserlänge, in diesem Fall 1 D = 0,2 m) genutzt, wobei 6 D beim normalen Arbeitsdruck des Kneters gefahren und 8 D bei 6,5 kPa (abs) gehalten wurden.

In die Mischturbine wurden eindosiert:
192 kg/h eines $\alpha$, $\omega$-Dihydroxypolydimethylsiloxans einer Viskosität von 80 000 $mm^2/s$ bei 25° C,
67 kg/h eines $\alpha$, $\omega$-Bis-trimethylsiloxypolydimethylsiloxans einer Viskosität von 100 $mm^2/s$ bei 25° C,
15,6kg/h Methyltriacetoxysilan und
25 kg/h einer pyrogenen Kieselsäure (BET-Oberfläche 150$m^2$/g);
in den Kneter wurde 6 D vom Austrag entfernt
27 g/h eines Katalysators auf der Basis von Organozinnsalzen zugegeben.

Die so erhaltene Masse besaß am Austrag der Schraubenspindelpumpe eine Temperatur von 39° C. Sie ist standfest und härtet in Anwesenheit von Luftfeuchtigkeit zu einem Elastomeren.

Beispiel 2:

Beispiel 1 wurde wiederholt, mit der Änderung, daß die Ausgangsstoffe nicht in die Mischturbine, sondern direkt in den Kneter eingespeist wurden, wo alle Ausgangsstoffe,ausgenommen der Katalysator,23 D (4,6 m) statt 14 D vor dem Austrag eingespeist wurden.

Die so erhaltene Masse besaß am Austrag der Schraubenspindelpumpe eine Temperatur von 32° C. Sie ist standfest und härtet in Anwesenheit von Luftfeuchtigkeit zum Elastomeren.

Beispiel 3:

Apparatur: Gemäß Beispiel 2; Druck im Vakuumteil des Kneters: 0,8 kPa.

In den Kneter wurden 23 D (4,6 m) vor dem Austrag
147 kg/h eines $\alpha$,$\omega$-Dihydroxypolydimethylsiloxans einer Viskosität von 20 000 $mm^2/s$ bei 25° C,
70 kg/h eines $\alpha$,$\omega$-Bis-trimethylsiloxypolydimethylsiloxanseiner Viskosität von 100 $mm^2/s$ bei 25° C,
16 kg/h Methyltriacetoxysilan und
58 kg/h eines Polyacrylnitrilpulvers einer Schüttdichte von 200 g/l
zugegeben;
in den Kneter wurde 6 D vom Austrag entfernt
90 g/h eines Katalysators auf der Basis von Organozinnsalzen zudosiert.

Die so erhaltene Masse besaß am Austrag der Schraubenspindelpumpe eine Temperatur von 38°

C. Sie ist standfest und härtet in Anwesenheit von Luftfeuchtigkeit zum Elastomeren.

Beurteilung der gemäß der Beispiele hergestellten Silikonmassen:

1) Qualitative Beurteilung nach Auftrag einer ca. 0,1 mm dicken Schicht auf eine Glasplatte:
Beispiel 1: stippenfrei, sehr gut;
Beispiel 2: einige kleine Stippen, gut;
Beispiel 3: einige kleine Stippen, gut.
2) Hautbildungszeit, gemessen bei 23 ° C und 50 % relativer Luftfeuchtigkeit:
Beispiel 1: 23 min;
Beispiel 2: 22 min;
Beispiel 3: 15 min.
3) Extrusionsrate durch eine Düse von 3 mm Durchmesser bei einem Druck von 0,21 N/mm$^2$:
Beispiel 1: 11,8 g/10 sec:
Beispiel 2: 6,6 g/10 sec;
Beispiel 3: 3,2 g/10 sec.

Das erfindungsgemäße Verfahren kann selbstverständlich entsprechend auch bei Rezepturen angewandt werden, bei denen kein Katalysator zugegeben wird.

**Patentansprüche**

1. Verfahren zur kontinuierlichen Herstellung von bei Raumtemperatur vernetzbaren Silikonmassen auf der Basis von zu vernetzendem Diorgano(poly)siloxan, Vernetzer, Füllstoff(en) und gegebenenfalls Katalysator(en) und weiteren Hilfsstoffen,
**dadurch gekennzeichnet,**
daß in einem ersten Schritt zu vernetzendes Diorgano(poly)siloxan, Füllstoff(e) und eventuell entweder Katalysator(en) oder Vernetzer und eventuell ein Teil oder alle gegebenenfalls zu verwendenden Hilfsstoffe in einem kontinuierlich arbeitenden geschlossenen Mischer vereinigt werden und in einem zweiten Schritt in einem oszillierenden Pilgerschrittkneter der so erhaltenen Masse die nicht im ersten Schritt zugegebenen Vernetzer oder/und gegebenenfalls Katalysator(en) sowie der Rest der gegebenenfalls zu verwendenden Hilfsstoffe zudosiert werden und die Masse in diesem Kneter homogenisiert und entgast wird.

2. Verfahren nach Anspruch 1,
**dadurch gekennzeichnet,**
daß die im zweiten Schritt erhaltene Masse durch eine Schraubenspindelpumpe mit selbstreinigender Entlüftung ausgetragen wird.

3. Verfahren nach Anspruch 1 oder 2,
**dadurch gekennzeichnet,**
daß im ersten Schritt als kontinuierlich arbeitender geschlossener Mischer eine axial durchströmte Mischturbine eingesetzt wird.

4. Verfahren nach Anspruch 1 oder 2,
**dadurch gekennzeichnet,**
daß im ersten Schritt als kontinuierlich arbeitender geschlossener Mischer ein oszillierender Pilgerschrittkneter eingesetzt wird.

**Claims**

1. Process for the continuous production of room temperature-crosslinkable silicone compositions based on diorgano(poly)siloxane which is to be crosslinked, crosslinking agent(s), filler(s) and optionally catalyst(s) and further auxiliaries, characterised in that in a first step, diorgano(poly)siloxane which is to be crosslinked, filler(s) and possibly either catalyst(s) or crosslinking agent(s) and possibly a part or all of the auxiliaries optionally to be used are combined in a closed mixer operating continuously and, in a second step in an oscillating pilgrim-step kneader, the crosslinking agent(s) or/and optionally catalyst(s) not added in the first step and the remainder of the auxiliaries optionally to be used are metered into the mass thus obtained and the mass is homogenized and vented in this kneader.

2. Process according to Claim 1, characterised in that the mass obtained in the second step is discharged by means of a spindle-type screw pump with a self-cleaning vent.

3. Process according to Claim 1 or 2, characterised in that an axial-flow mixing turbine is used in the first step as the closed mixer operating continuously.

4. Process according to Claim 1 or 2, characterised in that an oscillating pilgrim-step kneader is used in the first step as the closed mixer operating continuously.

**Revendications**

1. Procédé de fabrication continue de compositions siliconées pouvant réticuler à la température ambiante, à base de (poly)-diorganosiloxanes à réticuler, d'un agent de réticulation, d'une ou plusieurs matières de charge et éventuellement d'un ou plusieurs catalyseurs et d'autres substances auxiliaires, caractérisé en ce que, dans une première étape, on combine dans un mélangeur fermé, travaillant en continu, un (poly)-

diorganosiloxane à réticuler, une ou plusieurs matières de charge et éventuellement un ou plusieurs catalyseurs ou agents de réticulation, et éventuellement une partie ou la totalité des matières auxiliaires qu'il faut éventuellement utiliser, et que, dans une deuxième étape, dans un malaxeur oscillant à pas de pèlerin, on ajoute à la composition ainsi obtenue les agents de réticulation et/ou le ou les catalyseurs qui n'ont pas été ajoutés au cours de la première étape, ainsi que le reste des matières auxiliaires éventuellement à utiliser, la composition étant homogénéisée dans ce malaxeur, et dégazée.

**2.** Procédé selon la Revendication 1, caractérisé en ce que la composition obtenue dans la deuxième étape est déchargée grâce à une pompe à vis à dégazage autonettoyant.

**3.** Procédé selon la Revendication 1 ou 2, caractérisé en ce qu'on utilise dans la première étape, en tant que mélangeur fermé fonctionnant en continu, une turbine mélangeuse à passage axial.

**4.** Procédé selon la Revendication 1 ou 2, caractérisé en ce qu'on utilise dans la première étape, en tant que mélangeur fermé fonctionnant en continu, un malaxeur oscillant à pas de pèlerin.

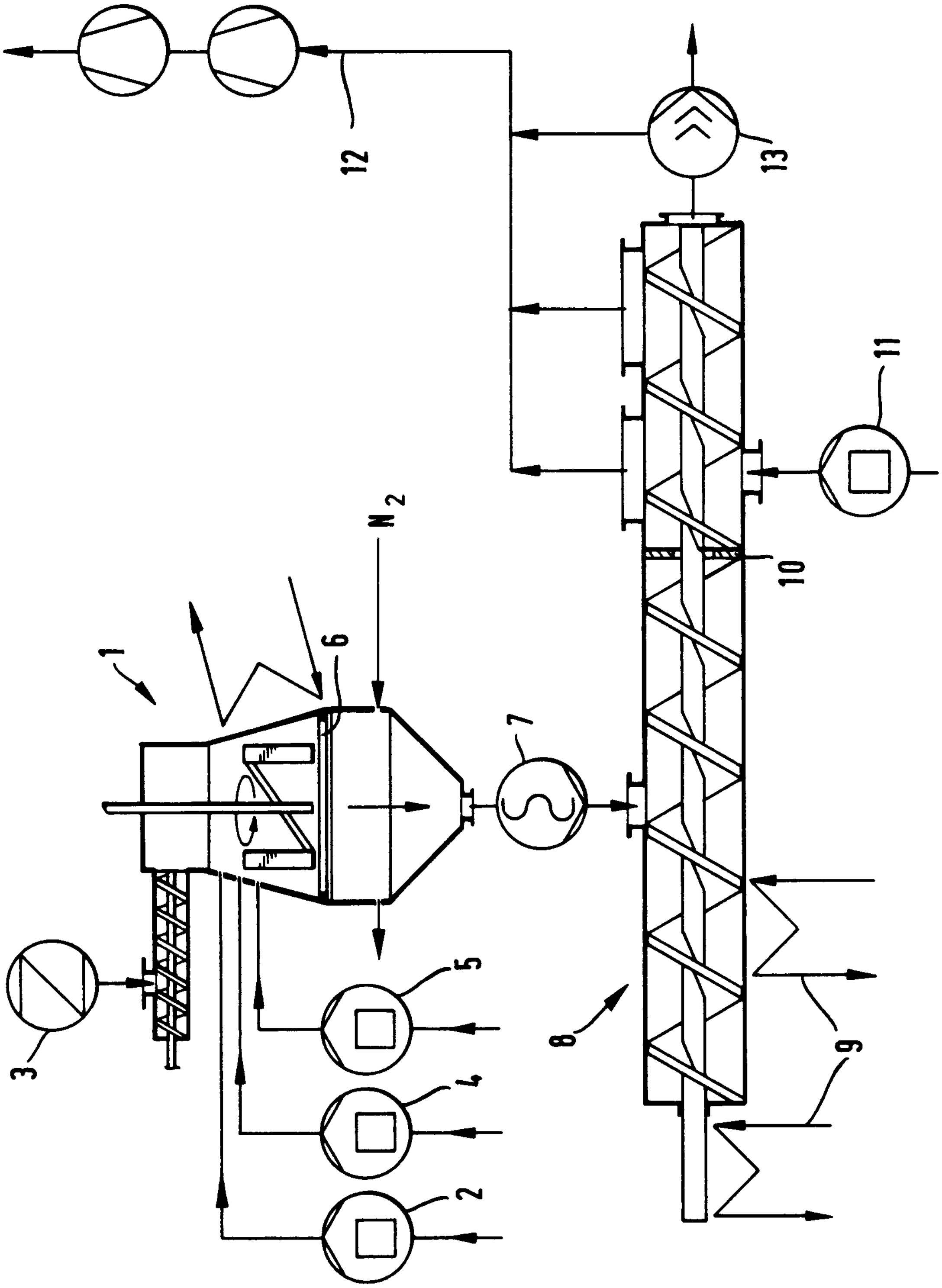
1
2
3
4
5
6
7
8
9
10
11
12
13
$N_2$